# EUROPÄISCHE PATENTSCHRIFT

(11) **EP 3 215 452 B1**
(45) Veröffentlichungstag und Bekanntmachung des Hinweises auf die Patenterteilung: **20.10.2021**
(21) Anmeldenummer: 15788380.2
(22) Anmeldetag: 29.10.2015
(51) Int. Cl.: B67C 3/28, G01L 23/32

(54) **DRUCKFÜLLEN VON BEHÄLTERN**
PRESSURE-FILLING OF CONTAINERS
REMPLISSAGE SOUS PRESSION DE RÉCIPIENTS

(30) Priorität: 07.11.2014 DE 102014116267
(43) Veröffentlichungstag der Anmeldung: 13.09.2017
(73) Patentinhaber: KHS GmbH, 44143 Dortmund (DE)
(72) Erfinder: CLÜSSERATH, Ludwig, 55543 Bad Kreuznach (DE); KRULITSCH, Dieter-Rudolf, 55545 Bad Kreuznach (DE)
(86) Internationale Anmeldenummer: PCT/EP2015/075102
(87) Internationale Veröffentlichungsnummer: WO 2016/071195

(56) Entgegenhaltungen:
- WO-A1-2010/131271
- DE-A1- 10 008 426
- DE-A1-102010 006 028
- DE-T2- 69 000 292

## Beschreibung

Die vorliegende Erfindung betrifft ein Verfahren zum Druckfüllen von Behältern mit einem flüssigen Füllgut in einer Füllvorrichtung mit wenigstens einem Füllelement, an welchem der jeweilige Behälter zumindest während eines Teils eines Füllprozesses mit seiner Behältermündung in Dichtlage anliegt und über welches (Füllelement) der Innenraum des Behälters während des Füllprozesses in wenigstens einem Prozessschritt mit wenigstens einem Prozessdruck beaufschlagt wird. Mit dem Füllelement ist hierbei wenigstens ein Drucksensor verbunden, der während des Füllprozesses den Druck im Innenraum des mit dem Füllelement verbundenen Behälters erfasst und ein diesen Druck entsprechendes elektrisches Signal an einer Auswerteinrichtung liefert, welche den zeitlichen Druckverlauf im Innenraum des Füllprozesses erfasst. Während des Füllprozesses ragt ein Rückgasrohr des Füllelements in den Behälter hinein und leitet das aus dem Behälter entweichende Gas ab, welches durch in den Behälter einströmende Füllgut verdrängt wird. Ein derartiges Füllverfahren ist z.B. aus der DE 100 08 426 A bekannt.

Diese Druckschrift zeigt eine Rotor-Füllvorrichtung, bei der im Umfangsbereich eines Rotors mehrere Füllstationen mit Füllelementen der Rotorfüllvorrichtung vorgesehen sind. In dieser Füllvorrichtung werden die Behälter, in der Regel Flaschen, Dosen oder dergleichen, in Behälteraufnahmen am Außenumfang der Rotorfüllvorrichtung gegriffen und mit dem Füllelement in Dichtlage gebracht. In der Regel wird die Flasche evtl. mehrere Male gespült und unter Inertgas-Zuführung mit einem Prozessdruck beaufschlagt, welcher in der Regel dem Fülldruck des Füllprozesses entspricht. Beim Füllprozess ragt ein Rückgasrohr des Füllelements in den Behälter hinein und leitet das beim Einfüllen des Füllguts aus dem Behälter entweichende Gas ab. Mit dem Behälterinnenraum bzw. mit einer Rückgasleitung des Füllelements ist in dieser Füllvorrichtung ein Drucksensor verbunden, der über den gesamten Füllprozesses den Druck misst und ein entsprechendes Signal an eine Auswerteeinrichtung leitet, die den zeitlichen Druckverlauf des gesamten Füllprozesses erfasst. Die bei dem Füllprozess erfassten Druckwerte werden mit Sollwerten verglichen, woraus ein eine Steuerung der Füllvorrichtung erkennen kann, ob der Füllprozess fehlerlos stattfindet. Eventuell kann die Steuerung in Folge des von der Auswerteinrichtung ermittelten Druckverlaufs auch eine Änderung des Prozesszyklus herbeiführen.

Ein Füllverfahren gemäß dem Oberbegriff des Anspruchs 1 ist aus der DE 690 00 292 T2 bekannt.

Es ist Aufgabe der Erfindung, ein Verfahren zum Druckfüllen von Behältern zu schaffen, welches eine einfache Steuerung des Füllprozesses zulässt. Diese Aufgabe wird erfindungsgemäß durch ein Verfahren mit den Merkmalen des Anspruches 1 realisiert. Vorteilhafte Weiterbildungen der Erfindung sind Gegenstand der zugeordneten abhängigen Ansprüche.

Erfindungsgemäß wird das Füllelement der Füllvorrichtung in Abhängigkeit von einem Ausgangssignal der Auswerteinrichtung gesteuert, wobei die Auswerteinrichtung den Druckverlauf und insbesondere auch das Auftreten einer Druckspritze überwacht, die auftritt, wenn der Füllgutstand im Behälter das Rückgasrohr erreicht. Wenn diese Druckspitze detektiert wird, wird ein Schließsignal für das Füllelement abgegeben, worauf diese sofort die Füllgutzufuhr in den Behälter stoppt. Das Schließsignal kann ein Schaltsignal der Auswerteinrichtung sein, das entweder der Steuerung der Füllvorrichtung zugeleitet wird, welche das Füllelement steuert, oder es wird direkt an das Füllelement abgegeben. Falls die Auswerteinrichtung ein Teil der Steuerung der Füllvorrichtung ist, wird das Schließsignal in der Steuerung selbst generiert. Erfindungsgemäß wird das Schließen des Füllelementes, welches in der Regel durch ein Füllventil realisiert ist, direkt von dem Signal des Drucksensors dahingehend abhängig gemacht, dass mit dem Erkennen der fraglichen Druckspitze sofort das Füllelement bzw. Füllventil geschlossen wird. In der Regel wird hierbei ein Dichtsitz in dem Füllventil geschlossen.

Während im Stand der Technik der ermittelte Druckverlauf bislang dazu benutzt wurde, den gesamten Füllprozess abzuwandeln, wird bei der vorliegenden Erfindung die Detektion einer bestimmten Druckspitze im Druckverlauf direkt zur Ableitung des Schließsignals für das Füllventil genutzt.

Wesentlich für die Erfindung war es hierbei zum einen, zu erkennen, dass immer, wenn der Füllgutstand im Behälter das Rückgasrohr erreicht, eine kleine Druckspitze im Druckverlauf auftritt. Ein weiterer Schritt der Erfindung bestand darin, zu erkennen, dass man diese Druckspitze als Trigger zum Schließen des Füllelements nutzen kann. Die Erfindung ermöglicht daher eine sehr einfache Prozesssteuerung des Füllprozesses vor allem gegen Ende des Füllprozesses. Durch die Erfindung kann die bisher übliche Ausstattung der Füllventile mit einer zusätzlichen Füllstandssonde entfallen. Dies ist ein wesentlicher Vorteil der Erfindung, da nunmehr umfangreiche elektrische Verkabelungen vollständig entfallen, zumindest aber erheblich vereinfacht werden können. Die erheblichen Kosten für die Füllstandssonde entfallen vollständig.

Nachfolgend werden die Ausdrücke "Füllelement" und "Füllventil" synonym verwendet.

Wie bereits vorab beschrieben wurde, kann die Auswerteinrichtung eine separate Einheit oder Teil einer Steuerung der Füllvorrichtung sein. Es ist möglich, die Auswerteinrichtung und deren Komponenten in einer Steuerung der Füllvorrichtung software-implementiert zu realisieren. Einzelne Komponenten der Erfindung können einfach oder mehrfach vorgesehen sein. Es ist darüber hinaus natürlich zusätzlich möglich, den Druckverlauf zur Steuerung des gesamten Füllprozesses zu nutzen, wie dies bereits in der DE 100 08 426 beschrieben wurde.

Zur Erfassung der Druckspitze aus dem Druckverlauf seitens der Auswerteinrichtung wird erfindungsgemäß die erste zeitliche Ableitung aufeinander folgender Druckwerte für die Detektion der Druckspitze herangezogen. Diese erste zeitliche Ableitung wird dann mit einem Referenzwert verglichen und bei Erreichen des Referenzwertes wird davon ausgegangen, dass die Druckspitze, die das Erreichen des Füllgutstands am Rückgasrohr anzeigt, vorliegt, worauf sofort das Schließsignal für das Füllelement bzw. ein Schaltsignal abgegeben wird, das entweder direkt an das Füllelement oder an die Steuerung der Füllvorrichtung zum Schließen der Füllelements abgegeben wird.

Zudem wird gemäß der Erfindung der absolute Druck zum Zeitpunkt der Detektion der Druckspitze berücksichtigt. Auf diese Weise kann vermieden werden, dass irgendeine andere Druckspitze im Füllprozess außer derjenigen verwendet wird, bei der der aufsteigende Füllgutspiegel das untere Ende des Druckgasrohres erreicht bzw. verschließt. Durch die Berücksichtigung des absoluten Drucks kann somit sichergestellt werden, dass die Druckspitze auf einem Druckniveau vorliegt, das beim Vorliegen der gewünschten Druckspitze vorliegen sollte, die beim Verschließen des Rückgasrohres durch den aufsteigenden Füllgutspiegel am Ende des Füllprozesses auftritt.

Vorzugsweise werden zu der Detektion der Druckspitze die Druckmesswerte über einen Zeitraum von 0,1 - 3 Sekunden herangezogen. Die über einen derartigen Zeitraum aufeinanderfolgenden Druckmesswerte eignen sich sehr gut zur Ermittlung von Druckplateaus und Druckspitzen in einem Druckverlauf.

Vorzugsweise kann zur Detektion der Druckspitze die Differenz der letzten 5 bis 50 Druckmesswerte von einem Mittelwert der Druckmesswerte über die letzten 1 - 3 Sekunden ermittelt werden. Diese Druckdifferenz wird beispielsweise mit einem Referenzwert verglichen, bei dessen Erreichen oder Überschreitung von dem Vorliegen der fraglichen Druckspitze ausgegangen wird.

Bisher ist die Druckspitze, die entsteht, wenn der steigende Füllgutspiegel das Ende des Rückgasrohres erreicht, nicht zur Verfahrenssteuerung im Füllprozess verwendet worden. Die vorliegende Erfindung macht dies und vereinfacht hiermit die Prozesssteuerung insbesondere am Ende des Füllprozesses.

Zur Detektion der Druckspitze kann zudem der Druckunterschied zwischen dem Fuß- und Scheitelpunkt der Druckspitze berücksichtigt werden, sodass nur Druckspitzen mit einer gewissen minimalen Amplitude berücksichtigt werden.

Beim Füllen von Behältern mit sich nach oben verengender Innenquerschnittsfläche gibt es in der Regel dann eine erste Druckspitze in Druckverlauf, wenn der im Behälter austeigende Füllgutspiegel den Bereich der sich verengenden Innenquerschnittsfläche erreicht. Mit dem Erreichen dieser Verengung beginnt eine Bremsfüllung, d.h. eine langsamere Befüllung des Behälters. Vorzugsweise kann nun vorgesehen sein, nur die Druckspitzen nach dem Beginn der Bremsfüllung zu berücksichtigen. Auf diese Weise bleiben alle früher im Füllprozess auftretenden Druckspitzen unberücksichtigt, womit die Sicherheit steigt, die richtige Druckspitze zu detektieren, bei welcher der Füllgutstand im Behälter das Rückgasrohr erreicht.

Beim Druckfüllen von Behältern wird vorzugsweise der Behälter mit einem Inertgas vorgespült, ggfs. nach mehreren Reinigungsspülungen mit Luft, Sauerstoff oder Inertgas. Auf diese Weise kann der Füllprozess beschleunigt werden.

Das erfindungsgemäße Verfahren erlaubt ein schnelles und zuverlässiges Steuern des Füllprozesses insbesondere bei CO2-haltiger Füllgut wie Limonaden, Bier, Cola oder dergleichen.

Zur besseren Verdeutlichung des erfindungsgemäßen Verfahrens wird ebenfalls eine Vorrichtung zum Druckfüllen von Behältern mit wenigstens einen Füllelement - vorzugsweise mehreren Füllelementen - offenbart, an welchem jeweils ein Behälter zumindest während eines Teil des Füllprozesses mit seiner Behältermündung in Dichtlage anliegt, und über welches der Innenraum des Behälters während des Füllprozesses in wenigstens einem Prozessschritt mit wenigstens einem Prozessdruck beaufschlagt wird. Die Druckbeaufschlagung erfolgt dabei in der Regel aber nicht notwendigerweise mit einem Inertgas. Mit dem Füllelement ist wenigstens ein Drucksensor verbunden, der während des Füllprozesses den Druck im Innenraum des mit dem Füllelement verbundenen Behälters erfasst und ein diesen Druck entsprechendes elektrisches Signal an eine Auswerteinrichtung liefert. Beim Füllprozess ragt ein Rückgasrohr des Füllelements in den Behälter hinein, welches Rückgasrohr das beim Einfüllen des Füllguts aus dem Behälter entweichende Gas ableitet.

Die Auswerteinrichtung ist funktionell mit dem Füllelement verbunden und die Auswerteinrichtung hat eine Detektionseinrichtung zum Erfassen einer Druckspitze am Ende eines Füllprozesses, die anzeigt, dass der Füllgutstand im Behälter das Rückgasrohr erreicht hat.

Die Detektionseinrichtung kann in der Auswerteinrichtung implementiert, z.B. softwareimplementiert sein. Sie kann auch als eigenes Modul innerhalb oder außerhalb der Auswerteinrichtung vorgesehen sein. In gleicher Weise kann die Auswerteinrichtung als eigenständiges Modul vorliegen oder in einer Steuerung der Füllvorrichtung integriert sein. Die Detektionseinrichtung hat eine Berechnungseinheit, die aus dem elektrischen Signal des Drucksensors das Vorliegen oder Nichtvorliegen der fraglichen Druckspitze berechnet, die anzeigt, dass der Füllgutstand das Rückgasrohr erreicht hat.

Für die Grundüberlegungen und Vorteile der Vorrichtung wird auf die Ausführungen in der Beschreibung des erfindungsgemäßen Verfahrens Bezug genommen.

Vorzugsweise werden für die Berechnung der Druckspitze eine Reihe aufeinanderfolgender Druckwerte über eine bestimmte Zeitdauer herangezogen, z.B. die letzten 50 bis 100000 Messungen. Hierdurch ist es möglich, im Druckverlauf Plateaus von Druckspitzen zu unterscheiden. Durch die zusätzliche Berücksichtigung des absoluten Druckwertes ist es möglich, Plateaus und Druckspitzen bestimmten Stadien des Füllprozesses zuzuordnen. Die Druckspitze, die beim Verschließen des Rückgasrohres durch den aufsteigenden Fülldruckspiegel entsteht, tritt am Ende des Füllprozesses auf. Die Auswerteinrichtung ist daher vorzugsweise derart ausgebildet, dass sie das Vorliegen einer detektierten Druckspitze aus dem Druckverlauf dem Ende des Füllprozesses zuordnen kann, so dass die Zuordnung der Druckspitze zum prozessualen Zeitpunkt des Erreichens des Rückgasrohres durch den aufsteigenden Füllgutspiegel eindeutig ist.

Vorzugsweise kann für die Detektion der Druckspitze auch eine Zeitsteuerung verwendet werden, die bewirkt, dass nur Druckspitzen innerhalb eines bestimmten Zeitfensters im Druckverlauf des Füllprozesses erfasst werden.

Vorzugsweise ist der Drucksensor an einem im Füllelement ausgebildeten Gaskanal angeordnet, der mit dem Innenraum des am Füllelement angesetzten Behälters in Verbindung steht. Dieser Gaskanal ist vorzugsweise der im Füllelement befindliche, mit dem Rückgasrohr verbundene Rückgaskanal. Auf diese Weise wird die Druckspitze beim Verschließen des Rückgaskanals am deutlichsten detektierbar.

Unter dem Begriff "Detektieren" wird für den Fachmann in verständlicher Weise eine Erkennung verstanden, die auf den Messwerten des Drucksensors basiert und auf Berechnungsalgorithmen der Auswerteeinrichtung, die es erlauben, diese Messwerte bestimmten Ereignissen des Füllprozesses zuzuordnen.

Vorzugsweise hat die Füllvorrichtung mehrere Füllelemente, wobei in diesem Fall vorzugsweise eine gemeinsame Auswerteinrichtung für sämtliche Füllelemente vorhanden ist.

Das Füllelement ist vorzugsweise als Füllventil ausgebildet, wobei beim Schließen des Füllventils vorzugsweise wenigstens ein Dichtsitz des Füllventils geschlossen wird.

Die Füllvorrichtung ist vorzugsweise eine Rotorfüllvorrichtung, die an ihren Umfang mehrere Behälteraufnahmen und zugeordnete Füllelemente aufweist. Eine derartige Rotorfüllvorrichtung ist derzeit gängig und zuverlässig in ihrer Funktion, dabei vergleichsweise platzsparend. Selbstverständlich ist es jedoch auch möglich, eine Reihenfüllvorrichtung, beispielsweise eine Behälterfüllmaschine in Linearbauweise zu verwenden, bei der die Füllelemente linear zueinander ausgerichtet sind und die Behälter geradlinig durch die Behälterfüllmaschine bewegt werden. Eine Füllvorrichtung mit nur einem Füllelement wäre natürlich auch möglich.

Sowohl die Detektionseinrichtung der Auswerteinrichtung als auch die Auswerteinrichtung selbst können in einer Steuerung der Füllvorrichtung software-implementiert sein. Die Steuerung der Füllvorrichtung ist in der Regel prozessorbasiert.

Die oben beschriebenen Ausführungsformen der Erfindung lassen sich in gewünschter Weise miteinander kombinieren, soweit sich dies technisch nicht widerspricht, und die resultierenden Kombinationen nicht den Umfang des unabhängigen Anspruchs 1 verlassen.

Die Erfindung wird nachfolgend beispielsweise anhand der schematischen Zeichnung beschrieben. In dieser zeigen:
Fig. 1 eine teilgeschnittene Ansicht eines Teils einer Füllvorrichtung mit einem Füllventil und einem Behälter;
Fig. 2 ein Diagramm eines üblichen Druckverlaufs wie es in der Auswerteinrichtung aus Figur 1 erfasst wird, und
Fig. 3 ein schematisches Diagramm eines Druckverlaufs beim Befüllen eines Behälters mit nach oben hin abnehmendem Behälterquerschnitt.

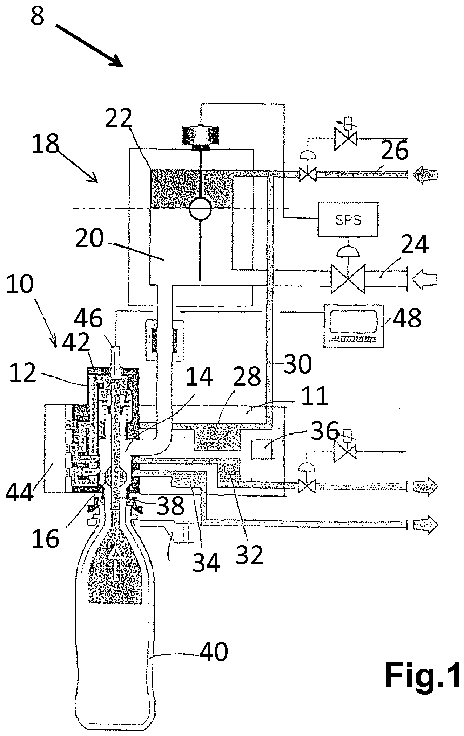

In der Figur 1 ist ein Füllelement in Form eines Füllventils 10 einer Rotorfüllvorrichtung 8 im Detail wiedergegeben, und zwar vorzugsweise als füllrohrloses Füllventil. Im Gehäuse 12 dieses Füllventils ist ein Flüssigkeitskanal 14 ausgebildet, in welchem u.a. ein Dichtsitz 16 angeordnet ist, welcher durch eine nicht dargestellte Betätigungseinrichtung zu Beginn eines Füllprozesses, z.B. zum Einleiten des Schnellfüllens geöffnet und am Ende des Füllprozesses, z.B. am Ende des Langsamfüllens (oder auch "Bremsfüllens") geschlossen wird. Der Dichtsitz 16 ist in Figur 1 in seiner geöffneten Stellung wiedergegeben. Das Füllventil 10 ist an einem äußeren Teil eines Rotors 11 der Rotorfüllvorrichtung 8 angeordnet. Das Füllventil 10 kann jedoch auch an einer Reihenfüllvorrichtung oder dergleichen angeordnet sein.

Der Flüssigkeitskanal 14 ist mit einem koaxial am Rotor 11 angeordneten Ringkessel 18 versehen, der einen Füllgutraum 20 und einen darüber liegenden Gasraum 22 für ein unter Druck stehende Inert-Gas, beispielsweise CO2 aufweist. Der Füllgutraum 20 wird über eine Füllgutleitung 24 mit dem flüssigen Füllgut versorgt, und zwar derart, dass das Niveau N des Füllgutspiegels in dem Ringkessel 18 auf einen vorgegebenen oder vorgewählten Wert eingeregelt ist. Der Gasraum 22 wird über eine Spanngasleitung 26 mit dem unter Druck stehenden Inert-Gas (CO2-Gas) versorgt, und zwar über eine Druckregelung in der Weise, dass der Druck im Gasraum 22 konstant oder im Wesentlichen konstant ist.

Für die einzelnen Behandlungs- oder Füllphasen sind am Rotor 11 bei der dargestellten Ausführungsform der Füllvorrichtung 8 für sämtliche Füllventile 10 gemeinsam noch folgende Komponenten vorgesehen:
- Ein Spanngas-Ringkanal 28, der über eine Zufuhrleitung 30 mit dem Gasraum 22 in Verbindung steht,
- ein erster Rückgas-Ringkanal 32, der für die Vorentlastung dient und in dem ein dem Vorentlastungsdruck entsprechender Druck eingeregelt ist,
- ein zweiter Rückgasringkanal 34, der für das Restentlasten mit der Atmosphäre in Verbindung steht, sowie
- ein Vakuum-Ringkanal 36, der mit einer nicht dargestellten Vakuumquelle verbunden ist.

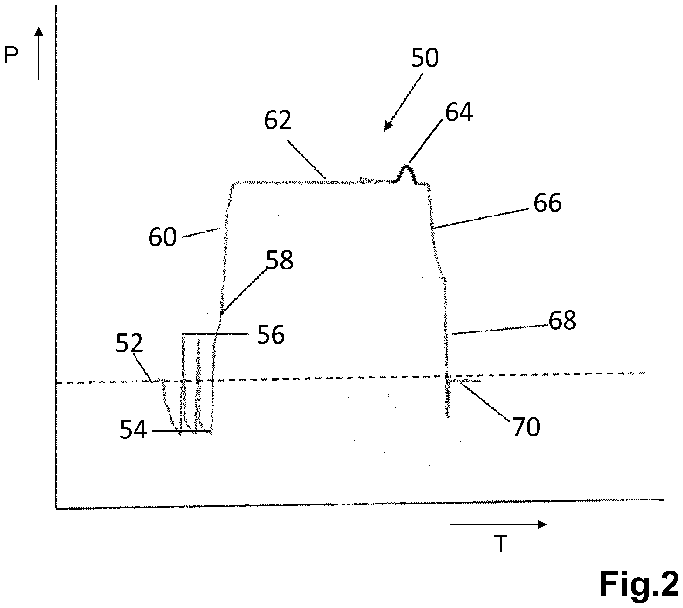

Jedes Füllventil 10 besitzt ein Rückgasrohr 38, welches bei am Füllventil 10 angesetzter Flasche 40 mit seinem unteren, offenen Ende in den Innenraum der jeweiligen Flasche 40 und mit seinem oberen, offenen Ende in einen im Gehäuse 12 ausgebildeten Gaskanal 42 mündet, der Bestandteil vom im Gehäuse 12 ausgebildeten Gaswegen ist. Diese sind über eine an jedem Füllventil 10 vorgesehene, individuell steuerbare Steuerventileinrichtung 44 derart steuerbar, dass der Innenraum der am Füllventil 10 in Dichtlage gehaltenen Flasche 40 für die einzelnen Behandlungsschritte mit dem Ringkanal 28, 32, 34, 36 verbunden ist, der dem jeweils vorzunehmenden Behandlungs- oder Prozess-Schritt entspricht, und zwar derart, dass sich bei ordnungsgemäß arbeitendem Füllventil 10 der in der Figur 2 wiedergegebene Solldruckverlauf während des Füllens ergibt.

Mit dem Gaskanal 42 ist ein Drucksensor 46 verbunden, der über das Rückgasrohr 38 ständig den im Innenraum der am Füllventil 10 vorgesehenen Flasche 40 vorhandenen Druck oder Druckverlauf erfasst und den entsprechenden Messwert an eine für sämtliche Füllventile 10 bzw. deren Drucksensoren 46 gemeinsame Auswerteeinrichtung 48 liefert, die vorzugsweise rechnergestützt bzw. von einem Rechner gebildet ist. Die Auswerteeinrichtung 48 kann Teil der Steuerung der Füllvorrichtung sein oder ein eigenes Funktionsmodul neben der Steuerung bilden.

Mit den Drucksensoren 46 und der Auswerteeinrichtung 48 besteht zum einen die Möglichkeit einer Überwachung und/oder Diagnose der einzelnen Füllventile 10 bei laufender Maschine, d.h. ein evtl. Fehlverhalten einzelner Füllventile wird frühzeitig erkannt, um ggf. Gegenmaßnahmen einzuleiten. Mit den Drucksensoren 25 und der gemeinsamen Auswerteeinrichtung 48 ist aber auch eine automatische, füllgutspezifische Regelung des Füllprozesses möglich.

In der Figur 2 ist schematisch der auch vom Drucksensor 46 am Füllventil 10 gemessene und von der Auswerteeinrichtung 48 erfasste Druckverlauf 50 beim Füllen eines Behälters mit identischem Behälterquerschnitt, z.B. einer Dose, dargestellt, wobei die Ordinate den Druck und die Abszisse die Zeit wiedergibt. Dem Druckverlauf sind die folgenden Verfahrensabschnitte 52 bis 70 zuzuordnen:
- 52: Beginn des Füllprozesses
- 54: Vorevakuierung des Behälters
- 56: Inertgasspülung des Behälters
- 58: Teilvorspannen des Behälters auf den Druck P2
- 60: Vorspannen des Behälters auf den Spann- oder Fülldruck P1
- 62: Schnellfüllen
- 64: Druckspitze - Füllgutstand im Behälter erreicht Rückgasrohr 38-Schließen des Dichtsitzes 16 im Füllventil 10
- 66: Vorentlastung, beispielsweise auf den Druck P2
- 68: Restentlasten auf Atmosphärendruck
- 70: Ende des Füllprozesses.

Durch die Druckspitze 64 erkennt die Auswerteeinrichtung 48, dass der Füllgutstand in dem Behälter das Rückgasrohr erreicht hat. Der Dichtsitz 16 im Füllventil 10 wird daraufhin geschlossen.

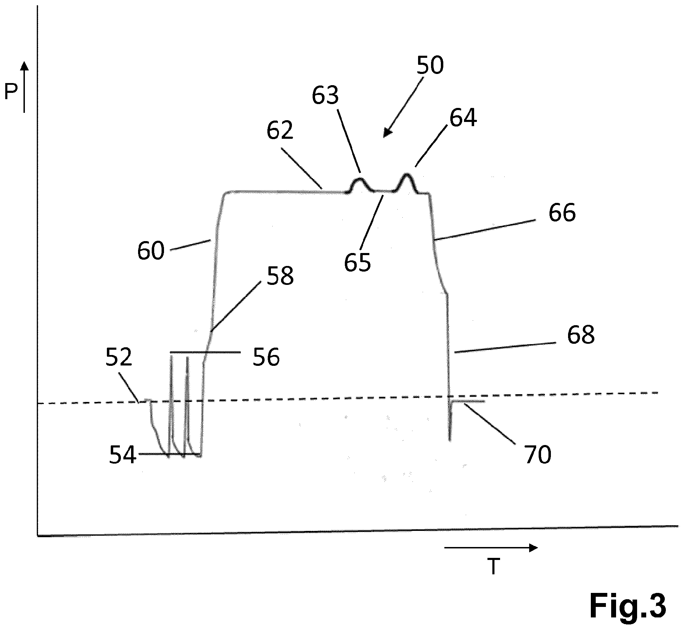

In Fig. 3 ist der Druckverlauf beim Füllen einer Bierflasche mit nach oben hin zum Flaschenhals verringertem Flaschenquerschnitt dargestellt. Zu Fig. 2 identische Verfahrensabschnitte sind hierbei mit den identischen Bezugszeichen versehen.

Im Gegensatz zu Fig. 2 erscheint im Druckverlauf 50 im Bereich des Druckplateaus P1 eine erste Druckspitze 63, die auftritt, wenn der Füllgutstand den Anfang des querschnittsverringerten Bereichs der Flasche 40 erreicht. Ab dieser ersten Druckspitze 63 wird das Langsamfüllen 65 (auch "Bremsfüllen" genannt) begonnen.

Wichtig ist hier, dass die Auswerteeinrichtung 48 die Druckspitze 64 und nicht die erste Druckspitze 63 als Signal erkennt, dass der Füllgutstand in der Flasche das Rückgasrohr erreicht hat, worauf der Dichtsitz 16 im Füllventil 10 geschlossen wird. Die Detektion der Druckspitze 64 könnte hier z.B. erst mit dem Langsamfüllen der Flasche 40 begonnen werden.

### Bezugszeichenliste:

- 10: Füllventil
- 11: Rotor
- 12: Gehäuse
- 14: Flüssigkeitskanal
- 16: Dichtsitz
- 18: Ringkessel
- 20: Füllgutraum
- 22: Gasraum
- 24: Füllgutleitung
- 26: Spanngasleitung
- 28: Spanngas-Ringkanal
- 30: Zufuhrleitung
- 32: erster Rückgas-Ringkanal
- 34: zweiter Rückgas-Ringkanal
- 36: Vakuum-Ringkanal
- 38: Rückgasrohr
- 40: Flasche
- 42: Gaskanal
- 44: Steuerventileinrichtung
- 46: Drucksensor
- 48: Auswerteeinrichtung
- 50: Druckverlauf
- 52-60: einzelne Verfahrensabschnitte des Druckverlaufs 50
- 62: Schnellfüllen
- 63: erste Druckspitze
- 64: Druckspitze
- 65: Langsamfüllen
- 66-70: einzelne Verfahrensabschnitte des Druckverlaufs 50

## Patentansprüche

1. Verfahren zum Druckfüllen von Behältern (40) mit einem flüssigen Füllgut in einer Füllvorrichtung mit wenigstens einem Füllelement (10), an welchem der jeweilige Behälter (40) zumindest während eines Teils des Füllprozesses mit seiner Behältermündung in Dichtlage anliegt und über welches der Innenraum des Behälters während des Füllprozesses in wenigstens einem Prozess-Schritt mit wenigstens einem Prozessdruck beaufschlagt wird, wobei an dem Füllelement (10) wenigstens ein Drucksensor (46) vorgesehen ist, der während des Füllprozesses den Druck im Innenraum des mit dem Füllelement (10) verbundenen Behälters (40) erfasst und ein diesem Druck entsprechendes elektrisches Signal an eine Auswerteeinrichtung (48) liefert, welche den zeitlichen Druckverlauf im Innenraum des Behälters während des Füllprozesses erfasst, wobei beim Füllprozess ein Rückgasrohr des Füllelements in den Behälter hineinragt und das beim Einfüllen des Füllguts aus dem Behälter entweichende Gas ableitet, **wobei** das Füllelement in Abhängigkeit von einem Ausgangssignal der Auswerteeinrichtung gesteuert wird, und wobei durch die Auswerteeinrichtung der Druckverlauf auf das Auftreten einer Druckspitze (64) überwacht wird, die auftritt, wenn der Füllgutstand im Behälter das Rückgasrohr erreicht, und ein Schließsignal für das Füllelement abgegeben wird, wenn diese Druckspitze detektiert wird, **dadurch gekennzeichnet, dass** zur Detektion der Druckspitze (64) die erste zeitliche Ableitung des gemessenen Drucks verwendet wird und diese mit einem Referenzwert verglichen wird, und dass zur Detektion der Druckspitze (64) der absolute Druck zum Zeitpunkt der Detektion der Druckspitze berücksichtigt wird.

2. Verfahren nach Anspruch 1, **dadurch gekennzeichnet, dass** zur Detektion der Druckspitze (64) die Druckmesswerte über eine Zeit von 0,1 bis 3 s herangezogen werden.

3. Verfahren nach einem der vorhergehenden Ansprüche, **dadurch gekennzeichnet, dass** zur Detektion der Druckspitze (64) die Differenz der letzten 5 bis 50 Druckmesswerte von einem Mittelwert der Druckmesswerte über die letzten 1 bis 3 s ermittelt wird und diese Differenz mit einem Referenzwert verglichen wird.

4. Verfahren nach einem der vorhergehenden Ansprüche, **dadurch gekennzeichnet, dass** zur Detektion der Druckspitze (64) der Druckunterschied zwischen dem Druck am Fuß und am Scheitelpunkt der Druckspitze berücksichtigt wird.

5. Verfahren nach einem der vorhergehenden Ansprüche zum Füllen von Behältern (40) mit sich nach oben verringernder Innenquerschnittsfläche, **dadurch gekennzeichnet, dass** für die Detektion der Druckspitze (64) nur der Druckverlauf nach dem Starten einer Bremsfüllung (65) berücksichtigt wird.

6. Verfahren nach einem der vorhergehenden Ansprüche, **dadurch gekennzeichnet, dass** zur Detektion der Druckspitze (64) der Zeitpunkt des Auftretens der Druckspitze im Druckverlauf berücksichtigt wird.

7. Verfahren nach einem der vorhergehenden Ansprüche, **dadurch gekennzeichnet, dass** der Behälter (40) zu Beginn des Füllprozesses mit einem Inertgas vorgespannt wird.

## Claims

1. Method for the pressure filling of containers (40) with a liquid filling product in a filling apparatus with at least one filling element (10), with which the respective container (40) is in a sealing contact position with its container mouth during at least a part of the filling process, and by means of which the interior of the container is subjected during the filling process with at least one process pressure in at least one process step, wherein at least one pressure sensor (46) is provided at the filling element (10), which, during the filling process, detects the pressure in the interior of the container (40) connected to the filling element (10), and sends an electrical signal corresponding to this pressure to an evaluation device (48), which detects the time-pressure characteristic course in the interior of the container during the filling process, wherein, during the filling process, a return gas tube of the filling element protrudes into the container and, during the filling of the filling product, conveys the escaping gas out of the container, **wherein** the filling element is controlled as a dependency of an output signal from the evaluation device, and wherein the pressure characteristic course is monitored by the evaluation device for the occurrence of a pressure peak (64), which occurs when the filling product level in the container reaches the return gas tube and the closure signal for the filling element is issued when this pressure peak is detected, **characterised in that**, for the detection of the pressure peak (64), the first time derivation of the measured pressure is used, and this is compared to a reference value, and that, for the detection of the pressure peak (64), the absolute pressure at the point of time of the detection of the pressure peak is taken into consideration.

2. Method according to claim 1, **characterised in that**, for the detection of the pressure peak (64), the measured pressure values are drawn on over a time period from 0.1 to 3 seconds.

3. Method in accordance with any of the preceding claims, **characterised in that**, for the detection of the pressure peak (64), the difference of the last 5 to 50 measured pressure values from a mean value of the measured pressure values over the last 1 to 3 seconds is detected, and this difference is compared with a reference value.

4. Method in accordance with any of the preceding claims, **characterised in that**, for the detection of the pressure peak (64), the pressure difference between the pressure at the foot and at the crest point of the pressure peak is taken into consideration.

5. Method in accordance with any of the preceding claims for the filling of containers (40) with internal cross-section surface areas which reduce as they rise upwards, **characterised in that**, for the detection of the pressure peak (64), only the pressure characteristic course after the start of a brake filling (65) is taken into consideration.

6. Method in accordance with any of the preceding claims, **characterised in that**, for the detection of the pressure peak (64), the point of time of the occurrence of the pressure peak in the pressure characteristic course is taken into consideration.

7. Method in accordance with any of the preceding claims, **characterised in that** the container (40) is pre-tensioned with an inert gas at the beginning of the filling process.

## Revendications

1. Procédé de remplissage sous pression de récipients (40) avec un produit de remplissage liquide dans un dispositif de remplissage avec au moins un élément de remplissage (10), contre lequel le récipient (40) respectif repose au moins pendant une partie du processus de remplissage avec son embouchure de récipient en position étanche et par lequel l'espace intérieur du récipient est alimenté pendant le processus de remplissage dans au moins une étape de processus en au moins une pression de processus, dans lequel au niveau de l'élément de remplissage (10) au moins un capteur de pression (46) est prévu, lequel détecte pendant le processus de remplissage la pression dans l'espace intérieur du récipient (40) relié à l'élément de remplissage (10) et fournit un signal électrique correspondant à cette pression à un dispositif d'évaluation (48) qui détecte la variation de pression temporelle dans l'espace intérieur du récipient pendant le processus de remplissage, dans lequel lors du processus de remplissage un tube de gaz de retour de l'élément de remplissage pénètre dans le récipient et évacue le gaz s'échappant du récipient lors du remplissage du produit de remplissage, **dans lequel** l'élément de remplissage est commandé en fonction d'un signal de sortie du dispositif d'évaluation, et dans lequel la variation de pression est surveillée par le dispositif d'évaluation quant à l'apparition d'un pic de pression (64) qui survient, lorsque l'état de produit de remplissage atteint dans le récipient le tube de gaz de retour, et un signal de fermeture pour l'élément de remplissage est émis, lorsque ce pic de pression est détecté, **caractérisé en ce que** pour la détection du pic de pression (64), la première évacuation temporelle de la pression mesurée est utilisée et celle-ci est comparée à une valeur de référence, et que pour la détection du pic de pression (64) la pression absolue est prise en compte au moment de la détection du pic de pression.

2. Procédé selon la revendication 1, **caractérisé en ce que** pour la détection du pic de pression (64) les valeurs de mesure de pression sont extraites sur une période de 0,1 à 3 s.

3. Procédé selon l'une des revendications précédentes, **caractérisé en ce que** pour la détection du pic de pression (64) la différence des 5 à 50 dernières valeurs de mesure de pression est déterminée par une valeur médiane des valeurs de mesure de pression sur les 1 à 3 dernières s et cette différence est comparée à une valeur de référence.

4. Procédé selon l'une des revendications précédentes, **caractérisé en ce que** pour la détection du pic de pression (64) la différence de pression est prise en compte entre la pression à la base et au sommet du pic de pression.

5. Procédé selon l'une des revendications précédentes pour le remplissage de récipients (40) avec une aire de section intérieure diminuant vers le haut, **caractérisé en ce que** pour la détection du pic de pression (64) seule la variation de pression est prise en compte après le démarrage d'un remplissage de frein (65).

6. Procédé selon l'une des revendications précédentes, **caractérisé en ce que** pour la détection du pic de pression (64) le moment de l'apparition du pic de pression dans la variation de pression est pris en compte.

7. Procédé selon l'une des revendications précédentes, **caractérisé en ce que** le récipient (40) est précontraint au début du processus de remplissage avec un gaz inerte.
